# EUROPÄISCHE PATENTANMELDUNG

(11) **EP 4 686 386 A1**
(43) Veröffentlichungstag der Anmeldung: **04.02.2026**
(21) Anmeldenummer: 25186500.2
(22) Anmeldetag: 01.07.2025
(51) Int. Cl.: A01C 17/00, A01C 21/00

(54) **VERFAHREN ZUR ERMITTLUNG VON EINSTELLPARAMETERN EINES SCHEIBENSTREUERS UND HIERFÜR GEEIGNETER SCHEIBENSTREUER**

(30) Priorität: 30.07.2024 DE 102024121732
(71) Anmelder: RAUCH Landmaschinenfabrik GmbH, 77836 Rheinmünster (DE)
(72) Erfinder: Stöcklin, Volker, 77975 Ringsheim (DE)
(74) Vertreter: Lichti - Patentanwälte Partnerschaft mbB

(57) **Zusammenfassung**

Die Offenbarungsschrift betrifft ein Verfahren zur Ermittlung von Einstellparametern eines Scheibenstreuers mit einem Dosierorgan, einer Verteilerscheibe und einer Einrichtung zur Veränderung der Drehzahl der Verteilerscheibe und/oder zur Verstellung des Aufgabepunktes auf die Verteilerscheibe, welche mit einer Steuer- bzw. Regeleinrichtung in Verbindung stehen. Ein Einstellparameter aus der Gruppe Massenstrom des dosierten Verteilgutes, Drehzahl und Aufgabepunkt wird entlang eines vorgegebenen Fahrweges des Scheibenstreuers bei einer vorgegebenen Geschwindigkeit entsprechend der Sollmenge an Verteilgut ermittelt und die Mehrzahl an entlang des Fahrweges ermittelten Einstellparametern in Form eines Bearbeitungsplans abgespeichert, welcher an die Steuer- bzw. Regeleinrichtung übermittelbar ist, um anlässlich des Verteilens des Verteilgutes auf dem Feld den Bearbeitungsplan aktivieren und den Einstellparameter an einer jeweiligen Position des Scheibenstreuers gemäß dem Bearbeitungsplan steuern bzw. regeln zu können. In einer Datenbank werden für verschiedene Werte des Einstellparameters mehrere dreidimensionale Streubilder hinterlegt, wobei zur Ermittlung des Einstellparameters entlang des Fahrweges jeweils ein optimales dreidimensionales Streubild aus den in der Datenbank für verschiedene Werte des Einstellparameters hinterlegten Streubildern simuliert und der Einstellparameter für das optimale Streubild ermittelt wird.

## Beschreibung

Die Erfindung betrifft ein Verfahren zur Ermittlung von Einstellparametern eines Scheibenstreuers zum Verteilen von Verteilgut auf einem Feld gemäß einer vorgegebenen Sollmenge an Verteilgut pro Flächeneinheit, wobei der Scheibenstreuer
- wenigstens ein Dosierorgan,
- wenigstens eine dem Dosierorgan nachgeordnete Verteilerscheibe und
- wenigstens eine Einrichtung zur Veränderung der Drehzahl der Verteilerscheibe und/oder wenigstens eine Einrichtung zur Verstellung des Aufgabepunktes des mittels des Dosierorgans dosierten Verteilgutes auf die Verteilerscheibe
umfasst, welche mit einer Steuer- und/oder Regeleinrichtung des Scheibenstreuers in Verbindung stehen, wobei wenigstens ein Einstellparameter aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe entlang wenigstens eines vorgegebenen Fahrweges des Scheibenstreuers auf einem Feld bei wenigstens einer vorgegebenen Fortbewegungsgeschwindigkeit entsprechend der jeweils vorgegebenen Sollmenge an Verteilgut pro Flächeneinheit ermittelt wird.

Ferner bezieht sich die Erfindung auf einen Scheibenstreuer zum Verteilen von Verteilgut auf einem Feld gemäß einer vorgegebenen Sollmenge an Verteilgut pro Flächeneinheit, wobei der Scheibenstreuer
- wenigstens ein Dosierorgan,
- wenigstens eine dem Dosierorgan nachgeordnete Verteilerscheibe und
- wenigstens eine Einrichtung zur Veränderung der Drehzahl der Verteilerscheibe und/oder wenigstens eine Einrichtung zur Verstellung des Aufgabepunktes des mittels des Dosierorgans dosierten Verteilgutes auf die Verteilerscheibe
umfasst, welche mit einer Steuer- und/oder Regeleinrichtung des Scheibenstreuers in Verbindung stehen.

Derartige Scheibenstreuer finden insbesondere in Form von Zweischeiben-Düngerstreuern in der Landwirtschaft zur Verteilung von Verteilgut, wie mineralischem und organischem Dünger, Saatgut und dergleichen, aber auch in Form von Winterdienststreumaschinen zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeibenstreuer etabliert, welche mit einem Paar von Verteilerscheiben mit diesen zugeordneten Dosierorganen ausgestattet sind.

Um für die gewünschte Verteilung des Verteilgutes auf dem Boden zu sorgen, lassen sich bei gattungsgemäßen Scheibenstreuern einerseits die Dosierung des Massenstromes an Streugut auf die einem jeweiligen Dosierorgan zugeordnete Verteilerscheibe, andererseits die Verteilung des Verteilgutes durch die Verteilerscheibe(n) mittels einer elektronischen Steuer- und/oder Regeleinrichtung steuern bzw. regeln. Für letzteres ist es üblich, Einstellmittel zum Einstellen des Scheibenstreuers auf verschiedene Arbeitsbreiten, Streugüter und/oder Verteilarten vorzusehen, wobei die Einstellmittel in der Regel eine Einrichtung zur Veränderung der Drehzahl einer jeweiligen Verteilerscheibe und/oder eine Einrichtung zur Verstellung des Aufgabepunktes des Verteilgutes auf eine jeweilige Verteilerscheibe umfassen. Die Dosierorgane umfassen üblicherweise einen aktuatorisch betätigten Dosierschieber, welcher mit einer Dosieröffnung zusammenwirkt, können selbstverständlich aber auch andersartig aufgebaut sein, wie beispielsweise in Form von Zellen-, Nockenrädern und dergleichen.

Eine gleichmäßige Verteilung des Streugutes auf dem Boden, wie sie zur Vermeidung von lokalen Über- bzw. Unterdünungen grundsätzlich angestrebt wird, ist insbesondere mittels Zweischeibenstreuern grundsätzlich gut zu bewerkstelligen, wobei auf dem zu bestreuenden Feld in der Regel mehrere, üblicherweise etwa parallele Fahrgassen angelegt sind, welche der Scheibenstreuer im Fahrgassenbetrieb nacheinander durchfährt, um eine definierte Überlappung der nebeneinander abgelegten Streufächer zu erzielen. Grundlage ist die etwa halbkreis- bzw. hörnchenförmige Streugutablage, bei welcher die Menge an Verteilgut innerhalb des Halbkreises bzw. Hörnchens von der Mitte zu den Randzonen abnimmt. Beim Anschlussfahren in der benachbarten Fahrgasse erfolgt eine entsprechend von innen nach außen abnehmende Streugutablage, so dass sich diese in der Überlappungszone zu einer weitestgehend gleichmäßigen Streugutverteilung ergänzen.

Moderne Scheibenstreuer verfügen ferner in der Regel über ein Positionserfassungssystem, wie beispielsweise GPS, so dass es möglich ist, die Dosierorgane des Scheibenstreuers sowie dessen Einstellmittel zum Einstellen des Scheibenstreuers auf verschiedene Arbeitsbreiten, Streugüter und/oder Verteilarten (Einrichtung zur Veränderung der Drehzahl einer jeweiligen Verteilerscheibe und/oder Einrichtung zur Verstellung des Aufgabepunktes des mittels eines jeweiligen Dosierorgans dosierten Verteilgutes auf eine jeweilige Verteilerscheibe) geschwindigkeitsabhängig stets entsprechend der gewünschten Sollmenge an Verteilgut pro Flächeneinheit anpassen zu können, was insbesondere dann gilt, wenn Änderungen der Dosiermenge und/oder des Streubildes während der Fahrt erforderlich sind, z.B. im Bereich von, insbesondere schräg zu den Fahrspuren verlaufenden, Feldgrenzen bzw. Vorgewenden, im Falle von innerhalb eines Feldes verschiedenen Sollmengen an Verteilgut, im Falle von Hindernissen auf dem Feld, Veränderungen der Feldtopologie oder auch sich verändernden äußeren Einwirkungen, wie Niederschlag, Wind oder dergleichen. Bei einer solchen Online-Steuerung- und/oder Regelung des Scheibenstreuers in Abhängigkeit seiner Fahrgeschwindigkeit und seiner aktuellen Position auf dem Feld kann allerdings stets nur das aktuelle Streubild, welches beispielsweise sensorisch erfasst werden kann (vgl. hierzu z.B. die EP 2 777 376 A2 oder die WO 2017/041884 A1), unter Berücksichtigung der bereits bearbeiteten Teilfläche - oder genauer: der bereits ausgebrachten Menge an Verteilgut pro Flächeneinheit - angepasst werden. Insbesondere bei komplexen, von einer Rechteckform stark abweichenden Feldgeometrien und/oder bei unregelmäßiger Feldtopologie, wie z.B. Gefällen mit unterschiedlichem Neigungswinkel und/oder mit unterschiedlicher Neigungsrichtung, gelangen solche bekannten Online-Steuer- und/oder Regelverfahren der Dosierorgane und der Einstellmittel von Scheibenstreuern an ihre Grenzen. Ähnliches gilt auch bei einfachen Feldgeometrien insbesondere für die Steuerung und/oder Regelung der Dosierorgane und der Einstellmittel von Scheibenstreuern im Übergangsbereich zwischen dem (in Bezug auf die Fahrgassen "schrägen" oder auch im Wesentlichen rechtwinkligen) Vorgewende sowie im Falle von atypischen oder sich verändernden Abständen der auf dem Feld angelegten Fahrgassen.

Der Erfindung liegt die Aufgabe zugrunde, ein Verfahren zur Ermittlung von Einstellparametern eines Scheibenstreuers zum Verteilen von Verteilgut auf einem Feld gemäß einer vorgegebenen Sollmenge an Verteilgut pro Flächeneinheit der eingangs genannten Art dahingehend weiterzubilden, dass die Homogenität der Streugutverteilung bzw. die Genauigkeit der Einhaltung der vorgegebenen Sollmenge an Verteilgut pro Flächeneinheit verbesset wird. Sie ist ferner auf einen zur Implementierung eines solchen Verfahrens geeigneten Zweischeibenstreuer gerichtet.

In verfahrenstechnischer Hinsicht wird diese Aufgabe gelöst mit einem Verfahren zur Ermittlung von Einstellparametern eines Scheibenstreuers zum Verteilen von Verteilgut auf einem Feld gemäß einer vorgegebenen Sollmenge an Verteilgut pro Flächeneinheit, wobei der Scheibenstreuer
- wenigstens ein Dosierorgan,
- wenigstens eine dem Dosierorgan nachgeordnete Verteilerscheibe und
- wenigstens eine Einrichtung zur Veränderung der Drehzahl der Verteilerscheibe und/oder wenigstens eine Einrichtung zur Verstellung des Aufgabepunktes des mittels des Dosierorgans dosierten Verteilgutes auf die Verteilerscheibe
umfasst, welche mit einer Steuer- und/oder Regeleinrichtung des Scheibenstreuers in Verbindung stehen, wobei wenigstens ein Einstellparameter aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe entlang wenigstens eines vorgegebenen Fahrweges des Scheibenstreuers auf einem Feld bei wenigstens einer vorgegebenen Fortbewegungsgeschwindigkeit entsprechend der jeweils vorgegebenen Sollmenge an Verteilgut pro Flächeneinheit ermittelt und die Mehrzahl an entlang des Fahrweges ermittelten Einstellparametern in Form eines Bearbeitungsplans abgespeichert wird, welcher an die Steuer- und/oder Regeleinrichtung des Scheibenstreuers übermittelbar ist, um anlässlich des Verteilens des Verteilgutes auf dem Feld mittels des Scheibenstreuers den Bearbeitungsplan aktivieren und den wenigstens einen Einstellparameter an einer jeweiligen Position des Scheibenstreuers gemäß dem vorab erstellten Bearbeitungsplan steuern und/oder regeln zu können, wobei in einer Datenbank für verschiedene Werte des wenigstens einen Einstellparameters eine Mehrzahl an dreidimensionalen Streubildern hinterlegt wird, und wobei zur Ermittlung des wenigstens einen Einstellparameters entlang des Fahrweges jeweils ein optimales dreidimensionales Streubild aus wenigstens einem der in der Datenbank für verschiedene Werte des wenigstens einen Einstellparameters hinterlegten dreidimensionalen Streubilder simuliert und der wenigstens eine Einstellparameter für das optimale dreidimensionale Streubild ermittelt wird.

In vorrichtungstechnischer Hinsicht sieht die Erfindung zur Lösung dieser Aufgabe ferner einen Scheibenstreuer der eingangs genannten Art vor, welcher sich dadurch auszeichnet, dass die Steuer- und/oder Regeleinrichtung des Scheibenstreuers zum Aktivieren eines gemäß dem vorgenannten Verfahren erstellten Bearbeitungsplans sowie zum Steuern und/oder Regeln wenigstens eines Einstellparameters aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe
entlang wenigstens eines vorgegebenen Fahrweges des Scheibenstreuers auf einem Feld bei wenigstens einer vorgegebenen Fortbewegungsgeschwindigkeit entsprechend der jeweils vorgegebenen Sollmenge an Verteilgut pro Flächeneinheit gemäß dem vorab erstellten Bearbeitungsplan ausgebildet ist.

Mit "dreidimensionalen Streubildern" im Sinne der Erfindung sind Streubilder angesprochen, welche nicht nur hinsichtlich ihrer Geometrie, also der in der Regel etwa fächer- bzw. hörnchenförmigen (zweidimensionalen) Fläche, innerhalb welcher Verteilgut auf dem Boden verteilt worden ist, sondern auch hinsichtlich ihrer Streugutverteilung innerhalb dieser auf dem Boden abgelegten Fläche, elektronisch erstellt worden sind.

Die Erfindung sieht folglich vor, dass wenigstens ein, vorzugsweise mehrere oder insbesondere sämtliche, Einstellparameter des Scheibenstreuers aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe entlang wenigstens eines, z.B. durch eine auf dem zu bearbeitenden Feld bereits angelegte Fahrgasse vorgegebenen Fahrweges des Scheibenstreuers bei wenigstens einer vorgegebenen Fortbewegungsgeschwindigkeit entsprechend der jeweils vorgegebenen Sollmenge an Verteilgut pro Flächeneinheit im Vorfeld des Verteilvorgangs, also bevor der Scheibenstreuer mit der Verteilarbeit auf dem Feld, ermittelt wird, wonach die Mehrzahl an entlang des Fahrweges ermittelten Einstellparametern in Form eines Bearbeitungsplans abgespeichert wird. Der Bearbeitungsplan, welcher die Einstellparameter für die Dosierorgane sowie Einstellmittel des Scheibenstreuers für eine Vielzahl an Positionen entlang der Fahrgassen enthält, kann sodann an die Steuer- und/oder Regeleinrichtung des Scheibenstreuers übermittelt werden, um anlässlich des (späteren) Verteilens des Verteilgutes auf dem Feld mittels des Scheibenstreuers den Bearbeitungsplan zu aktivieren und den wenigstens einen bzw. die mehreren Einstellparameter an einer jeweiligen Position des Scheibenstreuers gemäß dem vorab erstellten Bearbeitungsplan zu steuern und/oder zu regeln. Zur Ermittlung des wenigstens einen Einstellparameters werden in einer Datenbank für verschiedene Werte desselben eine Mehrzahl an dreidimensionalen Streubildern hinterlegt, wobei insbesondere dann, wenn entlang des Fahrweges des Scheibenstreuers Änderungen eines oder mehrerer Einstellparameter(s) erforderlich sind, zur Ermittlung des wenigstens einen Einstellparameters entlang des Fahrweges jeweils ein optimales dreidimensionales Streubild aus wenigstens einem oder insbesondere mehreren der in der Datenbank für verschiedene Werte des wenigstens einen Einstellparameters hinterlegten dreidimensionalen Streubilder simuliert und der wenigstens eine Einstellparameter für das optimale dreidimensionale Streubild ermittelt wird. Folglich wird mit im Vorfeld des eigentlichen Verteilvorgans analytisch erstellten bzw. simulierten dreidimensionalen Streubilden, welche von den Einstellparametern des Scheibenstreuers sowie von vielen anderen Faktoren, wie insbesondere den Flugeigenschaften des jeweiligen Verteilgutes, der Feldtopologie etc. (siehe hierzu weiter unten), abhängen, eine Vorsimulation und Optimierung der Einstellparameter des Scheibenstreuers auf einem vorab erfassten Feld durchgeführt.

In vorteilhafter Ausgestaltung kann vorgesehen sein, dass den in der Datenbank für verschiedene Werte des wenigstens einen Einstellparameters hinterlegten dreidimensionalen Streubildern ferner jeweils wenigstens ein für das Streubild charakteristischer Parameter, insbesondere die Wurfweite, vorzugsweise die mittlere Wurfweite, und/oder der Streuwinkel der Verteilerscheibe, zugeordnet wird. Mit "Wurfweite" im Sinne der Erfindung ist der Abstand des Streufächers vom Mittelpunkt einer jeweiligen Verteilerscheibe des Scheibenstreuers - bzw. im Falle eines Zweischeibenstreuers vom Mittelpunkt des Abstandes zwischen den beiden Verteilerscheiben - parallel zu dessen Fahrtrichtung gemeint, wobei die "mittlere Wurfweite" durch den Abstand des Schwerpunktes des auf dem Boden abgelegten, dreidimensionalen Streubildes vom Mittelpunkt einer jeweiligen Verteilerscheibe - bzw. im Falle eines Zweischeibenstreuers vom Mittelpunkt des Abstandes zwischen den beiden Verteilerscheiben - parallel zur Fahrtrichtung definiert ist. Mit "Streuwinkel" ist der Winkel angesprochen, dessen Scheitelpunkt im Mittelpunkt einer jeweiligen Verteilscheibe liegt und dessen Schenkel denjenigen Bereich begrenzen, innerhalb dessen von einer jeweiligen Verteilerscheibe Verteilgutpartikel auf dem Boden abgelegt werden.

Wie bereits angedeutet, kann in vorteilhafter Ausgestaltung vorgesehen sein, dass in der Datenbank für verschiedene Werte des wenigstens einen Einstellparameters jeweils eine Mehrzahl an dreidimensionalen Streubildern hinterlegt ist, welche ferner wenigstens einen Verteilparameter berücksichtigen, wobei zur Ermittlung des wenigstens einen Einstellparameters entlang des Fahrweges jeweils ein optimales dreidimensionales Streubild aus wenigstens einem der in der Datenbank für verschiedene Werte des wenigstens einen Einstellparameters unter Berücksichtigung des wenigstens einen Verteilparameters hinterlegten dreidimensionalen Streubilder simuliert und der wenigstens eine Einstellparameter für das optimale dreidimensionale Streubild ermittelt wird.

Bei den Verteilparametern kann es sich insbesondere um physikalische Eigenschaften eines jeweiligen Verteilguttyps handeln, wie insbesondere dessen Flugeigenschaften, welche je nach Kornform und -größe des Verteilgutes erheblich variieren können. Alternativ oder insbesondere zusätzlich kann es sich um feldspezifische Verteilparameter handeln, wie die geometrische Form des Feldes und/oder in dem Feld gegebenenfalls vorhandene Hindernisse, um die Einstellparameter des Scheibenstreuers in Übergangsbereichen zwischen dem Feldinnern und dem Vorgewende bzw. in Umgebungsbereichen von im Feld vorhandenen Hindernissen in optimaler Weise anzupassen, und/oder um die Feldtopologie, wie Neigungen verschiedener Form und/oder Richtung.

Die Feldtopologie und/oder in dem Feld gegebenenfalls vorhandene Hindernisse kann bzw. können dabei, sofern sie nicht bereits auf elektronischen Feldkarten hinterlegt zur Verfügung stehen, beispielsweise sensorisch ermittelt werden, wie z.B. mittels drohnen- oder fahrzeuggestützter Kameras oder anderen berührungsfreien Sensoren, wie Radar-, Ultraschall-, Infrarotsensoren oder dergleichen.

Gemäß einer Ausführungsvariante des erfindungsgemäßen Verfahrens kann beispielsweise vorgesehen sein, dass zur Simulation des optimalen dreidimensionalen Streubildes aus einer Mehrzahl an in der Datenbank für verschiedene Werte des wenigstens einen Einstellparameters und/oder für verschiedene Verteilparameter hinterlegten dreidimensionalen Streubildern wenigstens zwei oder mehr in der Datenbank für verschiedene Werte des wenigstens einen Einstellparameters und/oder für verschiedene Verteilparameter hinterlegte dreidimensionale Streubilder interpoliert werden.

Gemäß einer weiteren Ausführungsvariante kann beispielsweise vorgesehen sein, dass das optimale dreidimensionale Streubild, ausgehend von wenigstens einem in der Datenbank für wenigstens einen Wert des wenigstens einen Einstellparameters und/oder für wenigstens einen Verteilparameter hinterlegten dreidimensionalen Streubild, mittels einer Diskrete-Elemente-Methode (DEM) simuliert wird.

Gemäß einer weiteren Ausführungsvariante ist es beispielsweise auch denkbar, dass die Simulation des optimalen dreidimensionalen Streubildes aus einer Mehrzahl an in der Datenbank für verschiedene Werte des wenigstens einen Einstellparameters und/oder für verschiedene Verteilparameter hinterlegten dreidimensionalen Streubildern durch die Anwendung eines trainierten neuronalen Netzwerks auf die Mehrzahl an dreidimensionalen Streubildern erfolgt. Ein solches neuronales Netzwerk kann dabei beispielsweise mit Soll-Trainingsdaten trainiert worden sein, wobei die Soll-Trainingsdaten die dreidimensionalen Streubilder verschiedener Einstell- sowie vorzugsweise auch Verteilparameter und hiermit korrespondierende Einstellparameter der Dosierorgane und Einstellmittel des Scheibenstreuers umfassen.

In vorteilhafter Ausgestaltung kann vorgesehen sein, dass der wenigstens eine Einstellparameter an einer Mehrzahl an, insbesondere äquidistanten, Punkten entlang des vorgegebenen Fahrweges des Scheibenstreuers auf dem Feld ermittelt und die Mehrzahl an entlang des Fahrweges ermittelten Einstellparametern in dem Bearbeitungsplan abgespeichert wird. Es ergibt sich folglich eine, insbesondere äquidistante, Abfolge von optimalen Streubildern entlang des Fahrweges des Scheibenstreuers, aus welchen die zugehörigen Einstellparameter des Scheibenstreuers während der Fahrt entlang dieses Fahrweges resultieren.

Die in der Datenbank für verschiedene Werte des wenigstens einen Einstellparameters und/oder für verschiedene Verteilparameter hinterlegten Streubilder können beispielsweise auf einem Prüfstand eines jeweiligen Scheibenstreuers in Abhängigkeit des wenigstens einen Einstellparameters und/oder für verschiedene Verteilparameter sowie insbesondere auch in Abhängigkeit von weiteren Parametern einschließlich für verschiedenartige Verteilerscheiben erzeugt werden. Hierbei wird in als solcher bekannten Weise das von den Verteilerscheiben abgeworfene Verteilgut z.B. in einer Vielzahl an auf dem Boden aufgestellten Auffangschalen aufgefangen, um sowohl die Geometrie bzw. die Umfangsform des Streubildes auf dem Boden als auch die Menge an Verteilgut an einer Vielzahl an Punkten innerhalb des Streubildes zu erfassen und hieraus das dreidimensionale Streubild zu erstellen.

Die vorgegebene Sollmenge an Verteilgut pro Flächeneinheit eines jeweiligen Feldes kann beispielsweise aus einer als solches bekannten Applikationskarte ermittelt werden, welche z.B. wenigstens einen Applikationsparameter aus der Gruppe Bodenart, Bodenzustand, Pflanzenart, Pflanzenzustand und Reifegrad der Pflanzen berücksichtigen kann, um sich hieraus ergebenden, unterschiedlichen Anforderungen an die Sollmenge an Verteilgut innerhalb eines Feldes Rechnung zu tragen.

Das erfindungsgemäße Verfahren kann beispielsweise auf einem mit der Steuer- und/oder Regeleinrichtung des Scheibenstreuers in Verbindung stehenden Bordcomputer, einem externen Computer, einem Jobrechner eines ISOBUS-Terminals oder einem Cloud-Rechner durchgeführt werden, wonach der die ermittelten Einstellparameter umfassende Bearbeitungsplan an die Steuer- und/oder Regeleinrichtung übermittelt wird, und wobei anlässlich des Verteilens des Verteilgutes auf dem Feld mittels des Scheibenstreuers der Bearbeitungsplan aktiviert und der wenigstens eine Einstellparameter an einer jeweiligen Position des Scheibenstreuers gemäß dem vorab erstellten Bearbeitungsplan gesteuert und/oder geregelt wird. Sofern ein externer Computer oder Cloud-Rechner verwendet wird, kann der Bearbeitungsplan vorzugsweise, wenngleich nicht notwendigerweise, über drahtlose Übertragungsverfahren an die Steuer- und/oder Regeleinrichtung des Scheibenstreuers übermittelt werden.

Wie bereits erwähnt, erweist es sich als zweckmäßig, wenn während des Verteilens des Verteilgutes auf dem Feld mittels des Scheibenstreuers gemäß dem Bearbeitungsplan die Position des Scheibenstreuers mittels eines Positionserfassungssystem, insbesondere mittels GPS, erfasst und der Scheibenstreuer auf den jeweiligen, für eine jeweilige Position entlang dem Fahrweg ermittelten Einstellparameter gesteuert und/oder geregelt wird, sobald er diese Position erreicht hat. Die gibt insbesondere auch die Möglichkeit, eine Abweichung des Scheibenstreuers von dem vorgegebenen Fahrweg mittels des Positionserfassungssystems zu erfassen und das Streubild zur Kompensierung einer solchen Abweichung durch Veränderung des wenigstens einen Einstellparameters zu korrigieren.

Gemäß einer vorteilhaften Weiterbildung des erfindungsgemäßen Verfahrens kann vorgesehen sein, dass während des Verteilens des Verteilgutes auf dem Feld mittels des Scheibenstreuers gemäß dem Bearbeitungsplan das reale Streubild sensorisch ermittelt und mit dem dem Bearbeitungsplan zugrundeliegenden optimalen Streubild verglichen wird, wobei das reale Streubild im Falle einer Abweichung von dem dem Bearbeitungsplan zugrundeliegenden Streubild um einen vorgegebenen Wert durch Veränderung des wenigstens einen Einstellparameters korrigiert wird. Der Vergleich des realen mit dem optimalen Streubild muss hierbei nicht notwendigerweise auf der Grundlage der dreidimensionalen Streubilder, sondern kann insbesondere auch anhand wenigstens eines oder mehrerer für das Streubild charakteristischer Parameter, wie beispielsweise der (mittleren) Wurfweite und/oder dem Streuwinkel einer jeweiligen Verteilerscheibe erfolgen. Zur Ermittlung des realen Streubildes stehen aus dem Stand der Technik verschiedene berührungsfreie Sensoren zur Verfügung, wobei insbesondere in Bezug auf Sensorarrays auf der Basis von elektromagnetischer Strahlung, wie z.B. im Radarspektrum, beispielhaft auf die eingangs zitierten EP 2 777 376 A2 und WO 2017/041884 A1 verwiesen sei.

Gemäß einer weiteren vorteilhaften Weiterbildung des erfindungsgemäßen Verfahrens kann vorgesehen sein, dass während des Verteilens des Verteilgutes auf dem Feld mittels des Scheibenstreuers gemäß dem Bearbeitungsplan wenigstens ein Umgebungsparameter, insbesondere aus der Gruppe Windrichtung, Windstärke und Luftfeuchtigkeit, sensorisch ermittelt und das Streubild durch Veränderung des wenigstens einen Einstellparameters in Abhängigkeit des wenigstens einen Umgebungsparameters korrigiert wird.

Wie bereits angedeutet, kann ein erfindungsgemäßer Scheibenstreuer im Übrigen vorteilhafterweise in Form eines Zwei- oder Mehrscheibenstreuers ausgestaltet sein, welcher
- wenigstens zwei Dosierorgane,
- je eine, einem jeweiligen Dosierorgan nachgeordnete Verteilerscheibe und
- je eine, einer jeweiligen Verteilerscheibe zugeordnete Einrichtung zur Veränderung der Drehzahl der Verteilerscheibe und/oder je eine, einer jeweiligen Verteilerscheibe zugeordnete Einrichtung zur Verstellung des Aufgabepunktes des mittels des Dosierorgans dosierten Verteilgutes auf die jeweilige Verteilerscheibe
aufweist, welche mittels der Steuer- und/oder Regeleinrichtung unabhängig voneinander steuer- und/oder regelbar sind.

## Patentansprüche

1. Verfahren zur Ermittlung von Einstellparametern eines Scheibenstreuers zum Verteilen von Verteilgut auf einem Feld gemäß einer vorgegebenen Sollmenge an Verteilgut pro Flächeneinheit, wobei der Scheibenstreuer
- wenigstens ein Dosierorgan,
- wenigstens eine dem Dosierorgan nachgeordnete Verteilerscheibe und
- wenigstens eine Einrichtung zur Veränderung der Drehzahl der Verteilerscheibe und/oder wenigstens eine Einrichtung zur Verstellung des Aufgabepunktes des mittels des Dosierorgans dosierten Verteilgutes auf die Verteilerscheibe
umfasst, welche mit einer Steuer- und/oder Regeleinrichtung des Scheibenstreuers in Verbindung stehen, wobei wenigstens ein Einstellparameter aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe
entlang wenigstens eines vorgegebenen Fahrweges des Scheibenstreuers auf einem Feld bei wenigstens einer vorgegebenen Fortbewegungsgeschwindigkeit entsprechend der jeweils vorgegebenen Sollmenge an Verteilgut pro Flächeneinheit ermittelt und die Mehrzahl an entlang des Fahrweges ermittelten Einstellparametern in Form eines Bearbeitungsplans abgespeichert wird, welcher an die Steuer- und/oder Regeleinrichtung des Scheibenstreuers übermittelbar ist, um anlässlich des Verteilens des Verteilgutes auf dem Feld mittels des Scheibenstreuers den Bearbeitungsplan aktivieren und den wenigstens einen Einstellparameter an einer jeweiligen Position des Scheibenstreuers gemäß dem vorab erstellten Bearbeitungsplan steuern und/oder regeln zu können, wobei in einer Datenbank für verschiedene Werte des wenigstens einen Einstellparameters eine Mehrzahl an dreidimensionalen Streubildern hinterlegt wird, und wobei zur Ermittlung des wenigstens einen Einstellparameters entlang des Fahrweges jeweils ein optimales dreidimensionales Streubild aus wenigstens einem der in der Datenbank für verschiedene Werte des wenigstens einen Einstellparameters hinterlegten dreidimensionalen Streubilder simuliert und der wenigstens eine Einstellparameter für das optimale dreidimensionale Streubild ermittelt wird.

2. Verfahren nach Anspruch 1, **dadurch gekennzeichnet, dass** den in der Datenbank für verschiedene Werte des wenigstens einen Einstellparameters hinterlegten dreidimensionalen Streubildern ferner jeweils wenigstens ein für das Streubild charakteristischer Parameter, insbesondere die Wurfweite, vorzugsweise die mittlere Wurfweite, und/oder der Streuwinkel der Verteilerscheibe, zugeordnet wird.

3. Verfahren nach Anspruch 1 oder 2, **dadurch gekennzeichnet, dass** in der Datenbank für verschiedene Werte des wenigstens einen Einstellparameters jeweils eine Mehrzahl an dreidimensionalen Streubildern hinterlegt ist, welche ferner wenigstens einen Verteilparameter berücksichtigen, wobei zur Ermittlung des wenigstens einen Einstellparameters entlang des Fahrweges jeweils ein optimales dreidimensionales Streubild aus wenigstens einem der in der Datenbank für verschiedene Werte des wenigstens einen Einstellparameters unter Berücksichtigung des wenigstens einen Verteilparameters hinterlegten dreidimensionalen Streubilder simuliert und der wenigstens eine Einstellparameter für das optimale dreidimensionale Streubild ermittelt wird, wobei insbesondere wenigstens ein Verteilparameter
- die physikalischen Eigenschaften des Verteilguttyps,
- die geometrische Form des Feldes,
- in dem Feld gegebenenfalls vorhandene Hindernisse, und/oder
- die Feldtopologie
berücksichtigt.

4. Verfahren nach Anspruch 3, **dadurch gekennzeichnet, dass** die Feldtopologie und/oder in dem Feld gegebenenfalls vorhandene Hindernisse sensorisch ermittelt werden.

5. Verfahren nach einem der Ansprüche 1 bis 4, **dadurch gekennzeichnet, dass** zur Simulation des optimalen dreidimensionalen Streubildes aus einer Mehrzahl an in der Datenbank für verschiedene Werte des wenigstens einen Einstellparameters und/oder für verschiedene Verteilparameter hinterlegten dreidimensionalen Streubildern wenigstens zwei in der Datenbank für verschiedene Werte des wenigstens einen Einstellparameters und/oder für verschiedene Verteilparameter hinterlegte dreidimensionale Streubilder interpoliert werden.

6. Verfahren nach einem der Ansprüche 1 bis 5, **dadurch gekennzeichnet, dass** das optimale dreidimensionale Streubild, ausgehend von wenigstens einem in der Datenbank für wenigstens einen Wert des wenigstens einen Einstellparameters und/oder für wenigstens einen Verteilparameter hinterlegten dreidimensionalen Streubild, mittels einer Diskrete-Elemente-Methode (DEM) simuliert wird.

7. Verfahren nach einem der Ansprüche 1 bis 6, **dadurch gekennzeichnet, dass** die Simulation des optimalen dreidimensionalen Streubildes aus einer Mehrzahl an in der Datenbank für verschiedene Werte des wenigstens einen Einstellparameters und/oder für verschiedene Verteilparameter hinterlegten dreidimensionalen Streubildern durch die Anwendung eines trainierten neuronalen Netzwerks auf die Mehrzahl an dreidimensionalen Streubildern erfolgt.

8. Verfahren nach einem der Ansprüche 1 bis 7, **dadurch gekennzeichnet, dass** der wenigstens eine Einstellparameter an einer Mehrzahl an, insbesondere äquidistanten, Punkten entlang des vorgegebenen Fahrweges des Scheibenstreuers auf dem Feld ermittelt und die Mehrzahl an entlang des Fahrweges ermittelten Einstellparametern in dem Bearbeitungsplan abgespeichert wird.

9. Verfahren nach einem der Ansprüche 1 bis 8, **dadurch gekennzeichnet, dass** die in der Datenbank für verschiedene Werte des wenigstens einen Einstellparameters und/oder für verschiedene Verteilparameter hinterlegten Streubilder auf einem Prüfstand in Abhängigkeit des wenigstens einen Einstellparameters und/oder für verschiedene Verteilparameter erzeugt werden.

10. Verfahren nach einem der Ansprüche 1 bis 9, **dadurch gekennzeichnet, dass** die vorgegebene Sollmenge an Verteilgut pro Flächeneinheit eines jeweiligen Feldes aus einer Applikationskarte ermittelt wird, welche wenigstens einen Applikationsparameter aus der Gruppe Bodenart, Bodenzustand, Pflanzenart, Pflanzenzustand und Reifegrad der Pflanzen berücksichtigt.

11. Verfahren nach einem der Ansprüche 1 bis 10, **dadurch gekennzeichnet, dass** es auf einem mit der Steuer- und/oder Regeleinrichtung des Scheibenstreuers in Verbindung stehenden Bordcomputer, einem externen Computer, einem Jobrechner eines ISOBUS-Terminals oder einem Cloud-Rechner durchgeführt wird, wonach der die ermittelten Einstellparameter umfassende Bearbeitungsplan an die Steuer- und/oder Regeleinrichtung übermittelt wird, und wobei anlässlich des Verteilens des Verteilgutes auf dem Feld mittels des Scheibenstreuers der Bearbeitungsplan aktiviert und der wenigstens eine Einstellparameter an einer jeweiligen Position des Scheibenstreuers gemäß dem vorab erstellten Bearbeitungsplan gesteuert und/oder geregelt wird.

12. Verfahren nach einem der Ansprüche 1 bis 11, **dadurch gekennzeichnet, dass** während des Verteilens des Verteilgutes auf dem Feld mittels des Scheibenstreuers gemäß dem Bearbeitungsplan
- die Position des Scheibenstreuers mittels eines Positionserfassungssystem erfasst und der Scheibenstreuer auf den jeweiligen, für eine jeweilige Position entlang dem Fahrweg ermittelten Einstellparameter gesteuert und/oder geregelt wird, sobald er diese Position erreicht hat, wobei insbesondere eine Abweichung des Scheibenstreuers von dem vorgegebenen Fahrweg mittels des Positionserfassungssystems erfasst und das Streubild zur Kompensierung einer solchen Abweichung durch Veränderung des wenigstens einen Einstellparameters korrigiert wird; und/oder
- das reale Streubild sensorisch ermittelt und mit dem dem Bearbeitungsplan zugrundeliegenden optimalen Streubild, insbesondere anhand wenigstens eines für das Streubild charakteristischen Parameters, verglichen wird, wobei das reale Streubild im Falle einer Abweichung von dem dem Bearbeitungsplan zugrundeliegenden Streubild um einen vorgegebenen Wert durch Veränderung des wenigstens einen Einstellparameters korrigiert wird; und/oder
- wenigstens ein Umgebungsparameter, insbesondere aus der Gruppe Windrichtung, Windstärke und Luftfeuchtigkeit, sensorisch ermittelt und das Streubild durch Veränderung des wenigstens einen Einstellparameters in Abhängigkeit des wenigstens einen Umgebungsparameters korrigiert wird.

13. Scheibenstreuer zum Verteilen von Verteilgut auf einem Feld gemäß einer vorgegebenen Sollmenge an Verteilgut pro Flächeneinheit, wobei der Scheibenstreuer
- wenigstens ein Dosierorgan,
- wenigstens eine dem Dosierorgan nachgeordnete Verteilerscheibe und
- wenigstens eine Einrichtung zur Veränderung der Drehzahl der Verteilerscheibe und/oder wenigstens eine Einrichtung zur Verstellung des Aufgabepunktes des mittels des Dosierorgans dosierten Verteilgutes auf die Verteilerscheibe
umfasst, welche mit einer Steuer- und/oder Regeleinrichtung des Scheibenstreuers in Verbindung stehen, **dadurch gekennzeichnet, dass** die Steuer- und/oder Regeleinrichtung des Scheibenstreuers zum Aktivieren eines gemäß einem Verfahren nach einem der vorangehenden Ansprüche erstellten Bearbeitungsplans sowie zum Steuern und/oder Regeln wenigstens eines Einstellparameters aus der Gruppe
- Massenstrom des mittels des Dosierorgans dosierten Verteilgutes,
- Drehzahl der Verteilerscheibe und
- Aufgabepunkt des Verteilgutes auf die Verteilerscheibe
entlang wenigstens eines vorgegebenen Fahrweges des Scheibenstreuers auf einem Feld bei wenigstens einer vorgegebenen Fortbewegungsgeschwindigkeit entsprechend der jeweils vorgegebenen Sollmenge an Verteilgut pro Flächeneinheit gemäß dem vorab erstellten Bearbeitungsplan ausgebildet ist.

14. Scheibenstreuer nach Anspruch 13, **dadurch gekennzeichnet, dass** er
- wenigstens zwei Dosierorgane,
- je eine, einem jeweiligen Dosierorgan nachgeordnete Verteilerscheibe und
- je eine, einer jeweiligen Verteilerscheibe zugeordnete Einrichtung zur Veränderung der Drehzahl der Verteilerscheibe und/oder je eine, einer jeweiligen Verteilerscheibe zugeordnete Einrichtung zur Verstellung des Aufgabepunktes des mittels des Dosierorgans dosierten Verteilgutes auf die jeweilige Verteilerscheibe
aufweist, welche mittels der Steuer- und/oder Regeleinrichtung unabhängig voneinander steuer- und/oder regelbar sind.
